(19) **Europäisches Patentamt / European Patent Office / Office européen des brevets**

(11) **EP 3 930 256 A1**

(12) **EUROPEAN PATENT APPLICATION**

(43) Date of publication:
    **29.12.2021 Bulletin 2021/52**

(51) Int Cl.:
    **H04L 9/08** (2006.01)    **H04L 9/32** (2006.01)

(21) Application number: **21191530.1**

(22) Date of filing: **26.09.2019**

(84) Designated Contracting States:
    **AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018 US 201862737987 P**
    **30.08.2019 US 201916556267**

(62) Document number(s) of the earlier application(s) in accordance with Art. 76 EPC:
    **19786909.2 / 3 763 076**

(71) Applicant: **NEC Laboratories Europe GmbH**
    **69115 Heidelberg (DE)**

(72) Inventors:
    • **Andreina, Sébastien**
      **69115 Heidelberg (DE)**

    • **Karame, Ghassan**
      **69115 Heidelberg (DE)**
    • **Li, Wenting**
      **69115 Heidelberg (DE)**
    • **Marson, Giorgia Azzurra**
      **69115 Heidelberg (DE)**

(74) Representative: **Ullrich & Naumann PartG mbB**
    **Schneidmühlstrasse 21**
    **69115 Heidelberg (DE)**

Remarks:
    This application was filed on 18-08-2021 as a divisional application to the application mentioned under INID code 62.

(54) **METHOD AND SYSTEM FOR A TRUSTED EXECUTION ENVIRONMENT-BASED PROOF OF STAKE PROTOCOL**

(57) A method prevents posterior-corruption long-range attacks in a proof of stake blockchain protocol on a blockchain network. The method includes: generating, by a blockchain node, a fresh key pair, having a fresh public key to be included into a transaction and a fresh private key to be used for signing a next transaction; generating, by the blockchain node, the transaction having as an input an overall stake associated to an account of the blockchain node, and as an output a transfer stake to be transferred to a second node's public key, and a remaining account stake to be transferred to the fresh public key; signing, by the blockchain node, the transaction with a previous private key; and broadcasting, by the blockchain node, the generated transaction to the blockchain network.

FIG. 1

EP 3 930 256 A1

**Description**

CROSS-REFERENCE TO RELATED APPLICATION

The present application claims priority to U.S. Provisional Patent Application No. 62/737,987, filed on September 28, 2018, and of U.S. Non-Provisional Patent Application No. 16/556,267, filed on August 30, 2019, the entire contents of which is hereby incorporated by reference.

FIELD

The present invention relates to a method and system for a trusted execution environment-based proof of stake protocol for distributed ledger systems.

BACKGROUND

Distributed ledger systems are a type of distributed database management system that allow for data (e.g., transactions, metadata, etc.) to be recorded, shared, and synchronized across a distributed network of different network participants (e.g., nodes). A blockchain is particular type of data structure used in some distributed ledger systems that facilitates the storage and distribution of data in packages called "blocks" that are digitally connected to each other in a "chain." Blockchain technology provides a decentralized, open, Byzantine fault-tolerant transaction mechanism.

Distributed ledger systems, particularly those using blockchain technology, are becoming common for various types of Internet interactions, including anonymous online payments, remittance, and the transaction of digital assets (e.g., digital currencies). Cryptocurrencies (a type of digital currency), such as Bitcoin, Litecoin, Dogecoin, and Ethereum, are well-recognized examples of distributed ledger systems implemented with blockchain technology.

In spite of much skepticism, cryptocurrencies have experienced significant attention and market adoption, with Bitcoin in particular garnering the widest adoption and attention compared to other cryptocurrencies proposed to date. Indeed, Bitcoin currently holds the largest market share among existing cryptocurrencies, with a market capitalization in the tens of billions of U.S. dollars. One of the (many) reasons that led to the sustainability of the Bitcoin system was the large investments made by several mainstream companies in large data centers that are equipped with dedicated Proof of Work (PoW) mining capabilities.

PoW is a technique used to establish consensus in distributed ledger systems. For example, in some blockchain systems (e.g., Bitcoin, Litecoin, Dogecoin, and Ethereum), in order to add a new block to the chain (i.e., a new set of transactions to the ledger), a PoW is required. A PoW is a computational challenge that is hard to solve (in terms of computing power and processing time) but easy to verify. In some distributed ledger systems, the process of generating the PoW is called "mining."

Most of the existing blockchain protocols rely on the concept of PoW to prevent Sybil attacks in permissionless networks (e.g., where the attacker subverts the reputation system of a peer-to-peer network by creating a large number of pseudonymous identities and uses them to gain a disproportionately large influence). Unfortunately, PoW-based blockchains require miners to invest large amounts of computing power for reaching agreement in the network, resulting in a comparable amount of energy waste; for instance, it is estimated that Bitcoin miners can consume as much electricity as Australia in 2018.

To remedy the problem of wasteful computation which is inherent in PoW, a promising alternative is to make the mining process dependent on virtual resources rather than computation. The most prominent example of this paradigm considers as mining resource the stake owned by users, giving rise to energy-efficient consensus Proof of Stake (PoS) protocols.

Although several PoS protocols have been proposed in the recent years, PoS blockchains are not widely deployed, yet. Indeed, despite offering greatly improved performance and scalability compared to their PoW counterparts, PoS protocols still account for less than 2% of the market capitalization of existing digital currencies. This is due to existing PoS proposals being vulnerable to a number of security threats which do not arise, or are automatically taken care of, in the context PoW blockchains. In particular, in the PoS scenario it is hard to offer protection against long-range attacks, in which adversaries re-write the history of the blockchain starting from some block generated far in the past. The most devastating type of long-range attacks-and also the hardest to mitigate-exploits posterior corruption of users: the adversary obtains the secret keys of honest users who jointly held majority of stake at some point the past, and uses the stake associated to these keys (which now can be administrated by the adversary) to build an alternative, valid blockchain.

Most existing PoS proposals that explicitly aim at mitigating long-range attacks use checkpoints, which instruct nodes to reject any blockchain that differs from the local one more than a given number of blocks (meaning that no modification is allowed prior to the checkpoint). While checkpoints do mitigate long-range attacks under the assumption that all users are online and receive messages quickly, they provide no protection in the realistic blockchain scenario in which new users may join the network at any time and/or may be available only sporadically. For instance, a new user that retrieves two different blockchains, one maintained by a honest node and one by the adversary, has no way to discern which one they should trust.

SUMMARY

An embodiment of the present invention provides, a method that prevents posterior-corruption long-range attacks in a proof of stake blockchain protocol on a blockchain network. The method includes: generating, by a blockchain node, a fresh key pair, having a fresh public key to be included into a transaction and a fresh private key to be used for signing a next transaction; generating, by the blockchain node, the transaction having as an input an overall stake associated to an account of the blockchain node, and as an output a transfer stake to be transferred to a second node's public key, and a remaining account stake to be transferred to the fresh public key; signing, by the blockchain node, the transaction with a previous private key; and broadcasting, by the blockchain node, the generated transaction to the blockchain network.

BRIEF DESCRIPTION OF THE DRAWINGS

The present invention will be described in even greater detail below based on the exemplary figures. The invention is not limited to the exemplary embodiments. All features described and/or illustrated herein can be used alone or combined in different combinations in embodiments of the invention. The features and advantages of various embodiments of the present invention will become apparent by reading the following detailed description with reference to the attached drawings which illustrate the following:

> FIG. 1 illustrates an exemplary embodiment of a blockchain system;

> FIG. 2 illustrates a signal diagram showing a method according to a first preferred embodiment;

> FIG. 3 illustrates an purchase transaction and a payment transaction;

> FIG. 4 illustrates the key-update and key-deletion mechanism for blockchain;

> FIG. 5 illustrates a signal diagram showing a method according to a second preferred embodiment;

> FIG. 6 is a block diagram of a processing system according to an embodiment.

DETAILED DESCRIPTION

Embodiments of the present invention provide a Proof of Stake (PoS) blockchain protocol that relies on trusted execution environments (TEEs) for mining, and offers strong security even if some of the TEE devices are compromised. The present invention includes multiple embodiments addressing the problem of long-range attacks in the presence of compromised TEEs.

This invention includes two preferred embodiments having novel mechanisms to prevent long-range attacks based on posterior corruption of users. Embodiments of the present invention leverage trusted execution environments (TEEs) to guarantee sufficiently honest behavior of validators, and additionally seek protection against a powerful adversary that manages to compromise some of the TEE devices. Each of the preferred embodiments address the same security threat, namely preventing an adversary from exploiting the accounts of corrupt validators who held majority of stake in the past.

The first preferred embodiment includes a novel key-evolving mechanism to prevent an adversary, who corrupts users in the present, from transferring the stake held by these users in the past. The second preferred embodiment includes a new mining process for PoS to prevent an adversary from exploiting the stake held by validators in the past. Other embodiments of the present invention may use one or both techniques of the preferred embodiments.

In a blockchain system according to an embodiment, users issue transactions to exchange digital currency, and sign these transactions with account-specific keys to prevent tampering. Validators (a.k.a. "miners" in PoS) instead have the role of confirming transactions by regularly producing blocks. Everybody must register as a user prior to becoming a validator and being eligible to generate blocks. In contrast, users do not need to become validators in order to issue transactions.

In this blockchain system, validators are equipped with mining devices offering a trusted execution environment (TEE), such as Intel SGX. The validators implement a PoS protocol. The TEE devices provide trusted block signing, and offer remote attestation and sealing services. Should a TEE device be compromised, however, these features can no longer be guaranteed for that device.

The specifics of the mining protocol executed by validators, and in particular the operations executed within the TEE, are not essential to the present invention, and a person of ordinary skill in the art would readily understand how to implement them. For the sake of presentation, it is assumed that each validator may execute the mining process by passing as input a list of transactions $TX = (TX^1, ..., TX^t)$, the blockchain $BC = (B_0, ..., B_{r-1})$ they wish to extend, and obtaining as output a candidate "next block" $B_r$ or an indication of ineligibility. However, embodiments of the present invention are not so limited.

Advantageously, embodiments of the present invention limit the effect of posterior corruption in Proof of Stake (PoS) protocols. Most existing PoS protocols promise protection against long-range attacks by employing checkpoints, but for that checkpoint method to work, it relies on high network synchronicity and continuous participation of validators. Embodiments of the present invention avoid checkpoints, and their associated issues, and thus offer an enhancement over the state of the art PoS protocol systems.

A first preferred embodiment of the present invention improves, for example, the underlying PoS protocol by introducing a key-evolving mechanism for users. The key-evolving method does not rely on any existing forward-secure cryptographic building block, but uses the blockchain as a medium to make the (public) key-updates visible to other nodes, resulting in a more efficient and flexible solution than those based on forward-secure cryptographic primitives.

A second preferred embodiment of the present invention, utilizing a modification of the notion of stake as mining resource, offers, for example, protection against compromised TEEs with no performance overhead: it effectively only requires validators to maintain two kinds of stake information per user, the currency stake and the mining stake (rather than just the currency stake).

Both preferred embodiments independently provide an improved PoS protocol by also offering security against long-range attacks in case an adversary compromises TEE devices and manages to obtain the corresponding signing keys. While described separately, embodiments of the present invention (or features thereof) may be used together as well as separately.

In an embodiment, a blockchain user performs a method for preventing posterior-corruption long-range attacks in a proof of stake blockchain protocol on a blockchain network that includes: generating an initial key pair, having an initial public key and initial private key, for signing transactions; generating a fresh key pair, having a fresh public key and a fresh private key, for signing transactions; generating a transaction having as an input an overall stake associated to an account of the block, and as output the stake to be transferred to a validator's public key, an appropriate transaction fee, and the remaining account stake to be transferred to the fresh public key; broadcasting the generated transaction to the blockchain network; receiving an indication that the broadcast transaction is confirmed; and deleting the initial key pair based upon receiving the indication that the broadcast transaction is confirmed.

After generating the initial key pair, the blockchain user can purchase digital currency and issue a corresponding transaction on the blockchain network indicating that the blockchain user with that initial public key has an initial stake corresponding to the purchased digital currency.

The blockchain user can generate a new fresh key pair for every transaction the block chain user issues and can delete the previous fresh key pair when a current broadcast transaction is confirmed.

An embodiment of the present invention includes a blockchain node having a processor and a memory, the memory containing processor executable instructions that, when executed by the processor, cause the processor to perform the following operations for preventing posterior-corruption long-range attacks in a proof of stake blockchain protocol in a blockchain network: generating an initial key pair, having an initial public key and initial private key, for signing transactions; generating fresh key pair, having a fresh public key and a fresh private key, for signing transactions; generating a transaction having as an input an overall stake associated to an account of the block, and as output the stake to be transferred to a validator's public key, an appropriate transaction fee, and the remaining account stake to be transferred to the fresh public key; broadcasting the generated transaction to the blockchain network; receiving an indication that the broadcast transaction is confirmed; and deleting the initial key pair based upon receiving the indication that the broadcast transaction is confirmed.

Alternatively or additionally, an embodiment of the present invention may include a method, performed by a blockchain validator, for preventing posterior-corruption long-range attacks in a proof of stake blockchain protocol in a blockchain network that includes: initializing and registering a trusted execution environment (TEE) device; generating a block on a local blockchain branch of the blockchain validator; and validating an alternative blockchain of the blockchain network based on public keys of TEE devices associated with each block leader. The PoS block chain protocol includes two kinds of stake information, the currency stake and the mining stake.

The initializing and registering operation can include: generating a signing key pair, including a public key and a private key; remotely-attesting the trusted enclave application, including generating an attestation certificate; and issuing a registration transaction to distribute the attestation certificate. The registration transaction can specify an amount of mining stake purchased by the blockchain validator. Once the registration transaction is confirmed, the TEE device becomes capable of mining blocks in the blockchain network.

The generating a block operation can include: generating an eligibility proof within the trusted enclave application; determining that the blockchain validator is eligible to generate the block for a considered round, preparing, based on determining the blockchain validator is eligible to generate the block, a block header and requesting a corresponding block signature from the trusted application enclave; signing the block with the block signature; and broadcasting the signed block to the blockchain network.

The validating the alternative blockchain operation can include: receiving the alternative blockchain; and verifying a consistency of a latest block's timestamp of the alternative blockchain against a local time. If the verifying fails, the alternative blockchain is rejected. Otherwise the blockchain validator performs the following verification operations for all blocks of the alternative blockchain, starting with the latest block: verifying that a block signature is valid with respect to the public key of the TEE device associated to the block leader; verifying that the block leader was eligible for the corresponding round with respect to the block leader's mining stake; verifying that the header is well-formed and points to a previous block; and verifying that transactions included in the block are valid.

In an embodiment, a blockchain node that includes a processor and a memory, the memory containing processor executable instructions that, when executed by the processor, cause the processor to perform the following operations for preventing posterior-corruption long-range attacks in a proof of stake blockchain protocol in a blockchain network: initializing and registering a trusted execution environment (TEE) device; generating a block on a local blockchain branch of the blockchain validator; and validating an alternative blockchain of the blockchain network based on public keys of TEE devices associated with each block leader.

In an embodiment, there is provided a method that includes: generating, by a blockchain node, (a sequence of) key pairs for signing and allowing verification of transactions. In an embodiment, the private key is for signing and the public one is for allowing verification.

A method of an embodiment prevents posterior-corruption long-range attacks in a proof of stake blockchain protocol on a blockchain network. The method includes: generating, by a blockchain node, a fresh key pair, having a fresh public key to be included into a transaction and a fresh private key to be used for signing a next transaction; generating, by the blockchain node, the transaction having as an input an overall stake associated to an account of the blockchain node, and as an output a transfer stake to be transferred to a second node's public key, and a remaining account stake to be transferred to the fresh public key; signing, by the blockchain node, the transaction with a previous private key; and broadcasting, by the blockchain node, the generated transaction to the blockchain network.

The method may further include: receiving, by the blockchain node, an indication that the broadcasted transaction is confirmed; and deleting, by the blockchain node, the private key associated with the broadcasted transaction based upon receiving the indication that the broadcasted transaction is confirmed.

The transaction may be signed with a most recent non-fresh private key.

The blockchain node may generate a new fresh key pair for every transaction the blockchain node issues and may delete a previous fresh key pair when a previously broadcasted transaction is confirmed.

Another embodiment of the present invention provides a blockchain node, which includes a processor and a memory. The memory includes processor executable instructions that, when executed by the processor, cause the processor to perform the following operations for preventing posterior-corruption long-range attacks in a proof of stake blockchain protocol in a blockchain network: generate a fresh key pair, having a fresh public key to be included into a transaction and a fresh private key, to be used for signing a next transaction; generate a transaction having as an input an overall stake associated to an account of the blockchain node, and as output a transfer stake to be transferred to a second node's public key, and a remaining account stake to be transferred to the fresh public key; sign the transaction with a previous private key; and broadcast the generated transaction to the blockchain network.

The instructions can be configured to further cause the processor to perform the following operations: receive an indication that the broadcasted transaction is confirmed; and delete the private key associated with the broadcasted transaction based upon receiving the indication that the broadcasted transaction is confirmed.

The transaction can be signed with a most recent non-fresh private key.

In an embodiment, the blockchain node generates a new fresh key pair for every transaction the blockchain node issues and deletes a previous fresh key pair when a previously broadcasted transaction is confirmed.

In an embodiment, the instructions are configured to further cause the processor to perform the following operations: generate an initial key pair; purchase digital currency and issue a corresponding transaction on the blockchain network indicating that the blockchain node with the initial public key has an initial stake corresponding to the purchased digital currency.

Another embodiment of the present invention provides a method for preventing posterior-corruption long-range attacks in a proof of stake blockchain protocol in a blockchain network. The method includes: generating, by a blockchain node associated with a TEE device, a signing key pair, including a public key and a private key; remotely-attesting, by the blockchain node, a trusted enclave application, including generating an attestation certificate; and issuing, by the blockchain node, a registration transaction to distribute the attestation certificate; the registration transaction specifying an amount of mining stake purchased by the blockchain validator.. Once the registration transaction is confirmed, the TEE device becomes enabled for mining blocks in the blockchain network.

In an embodiment, the registration transaction is confirmed based on the registration transaction appearing in a block of the blockchain that is followed by a predetermined number of blocks.

In an embodiment, the registration transaction is confirmed further based on the blockchain node generating an eligibility proof within the trusted enclave application.

The method may further include: determining, by the blockchain node, that the blockchain node is eligible to generate the block for a considered round; preparing, by the blockchain node based on determining the blockchain node is eligible to generate the block, a block header and receiving a corresponding block signature from the trusted application enclave; signing, by the blockchain node, the block with the corresponding block signature; and broadcasting, by the blockchain node, the signed block to the blockchain network.

The method may further include a method of an offline node that connects to the blockchain network to confirm a version of the blockchain that includes: receiving, by the blockchain node, a blockchain, verifying, by the blockchain node, a consistency of a latest block's timestamp of the blockchain against a local time; and if the verifying fails, rejecting by the blockchain node, the blockchain, otherwise the blockchain node performs a verification operation for all blocks of the blockchain.

The verification operation may include, for each of the blocks and starting with a latest block of the blocks: verifying that a block signature is valid with respect to the public key of the TEE device associated with a corresponding block leader; verifying that the corresponding block leader was eligible for a corresponding round with respect to the corresponding block leader's mining stake; verifying that a corresponding header is well-formed and points to a previous block of the blocks; and verifying that transactions included are valid.

In an embodiment, blockchain nodes implement a method for preventing posterior-corruption long-range attacks in a proof of stake blockchain protocol in a blockchain network, the method includes the following operations:

1. Upon joining the network, each user $U$ generates an initial signing key-pair ($pk_U^0$, $sk_U^0$), and possibly purchases a given amount of stake $S_U$, otherwise their stake is set to $S_U = 0$.

2. To purchase stake, the user issues a *purchase-stake* transaction $TX^{purchase}$ that, upon being confirmed and included in a block, effectively informs the other blockchain nodes that a user with account public-key $pk_U^0$ and initial stake $S_U$ joined the network.

3. Whenever a user U wishes to transfer a given amount of stake $s \leq S_U$, where $S_U$ is the current account balance of $U$, to some other user account $V$, $U$ issues a corresponding transaction $TX$ that, beyond respecting the transaction format of the underlying digital currency, shall indicate public key $pk_U$ as the *source* account, $pk_V$ as the *destination* account, and $x$ as the amount of stake to be transferred. User $U$ also encapsulates into $TX$ a second type of information, namely an updated account public-key. More precisely, $U$ generates a fresh signing key pair ($pk_U'$, $sk_U'$) and, to declare $pk_U'$ as the new account public key, they indicate the entire $S_U$ as the overall input stake, $x$ as the amount of stake to be transferred to public key $pk_V$, and $S_U - x$ as the amount of stake to be addressed to the fresh public key $pk_U'$. The resulting transaction $TX$ is finally broadcast to the network.

4. A transaction $TX$ is confirmed by a user $W$ if it appears in one of the blocks of the blockchain maintained by $W$ and is "sufficiently deep" in the blockchain: in this case, $W$ registers $pk_U'$ as the current public key of user $U$. As soon as $TX$ is confirmed by the issuer $U$, the latter shall delete their outdated secret key $sk_U$ and use ($pk_U'$, $sk_U'$) as the current key pair.

5. Transactions are validated against the (current) public key $pk_{issuer}$ of the issuer as well as their amount of stake held by them, according to the validation predicate specified by the digital currency.

In another embodiment, blockchain nodes, with a TEE device for mining, implement a method for preventing posterior-corruption long-range attacks in a proof of stake blockchain protocol in a blockchain network, the method includes the following operations:

1. User $U$ registers the TEE by issuing a corresponding registration transaction $TX^{reg}$ which includes the public key $pk_U$ of the user, the public key $pk_U^T$ associated with the TEE signing key, and the mining stake $MS_U$, $0 \leq MS_U \leq \min\{S_U, MS_{max}\}$, to be allocated to $U$'s mining device, where $MS_{max}$ is a protocol-specific threshold determining the maximum amount of mining stake that can be awarded to validators. The mining stake is effectively purchased in exchange of digital currency, hence it cannot exceed the balance of user $U$.

2. As soon as the transaction $TX^{reg}$ is confirmed, i.e., it appears in a "sufficiently deep" block of the blockchain, $U$ is recognized as validator and can start mining blocks. To this end, $U$ executes the underlying PoS mining protocol, the only difference being that validators are weighed depending on their mining stake $MS_U$ rather than their currency stake $S_U$. A "sufficiently deep" block is one that is followed by N many blocks, where N is a parameter of the underlying PoS protocol.

3. If validator $U$ is eligible in a given round $r$, they generate block $B_r$ following the procedure indicated by the underlying PoS protocol. The validator will receive a reward for contributing the mining process: part of it in digital currency (e.g., the overall amount of fees for the transactions included in the block), and part of it in mining stake (e.g., an amount corresponding to the block reward).

4. The block validation process also closely follows the underlying PoS protocol, with the exception that eligibility of an alleged block leader $U$ is checked against their mining stake $MS_U$ (rather than their currency stake $S_U$).

Embodiments of the present invention are further described below in connection with the figures. The invention is not limited to the exemplary embodiments.

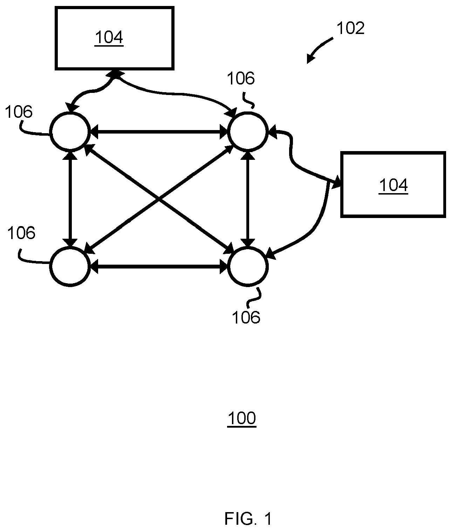

FIG. 1 illustrates an exemplary blockchain system 100 with several blockchain nodes in communication with each other to form the blockchain network 102. The nodes of the blockchain system 102 include users 104 and validators 106. The users 104 issue transactions (e.g., transactions to exchange digital currency), and sign these transactions with account-specific keys to prevent tampering. The signed and issued transactions are sent on to the blockchain network 102, e.g., via the validators 106. Validators 106 (a.k.a. "miners") confirm the transactions by regularly producing blocks.

In the blockchain system 100, validators 106 are implemented with mining devices (e.g., computers) having a trusted execution environment (TEE), such as Intel SGX. The validators 106 implement a PoS protocol. The TEE of each validator 106 provides trusted block signing, and offer remote attestation and sealing services.

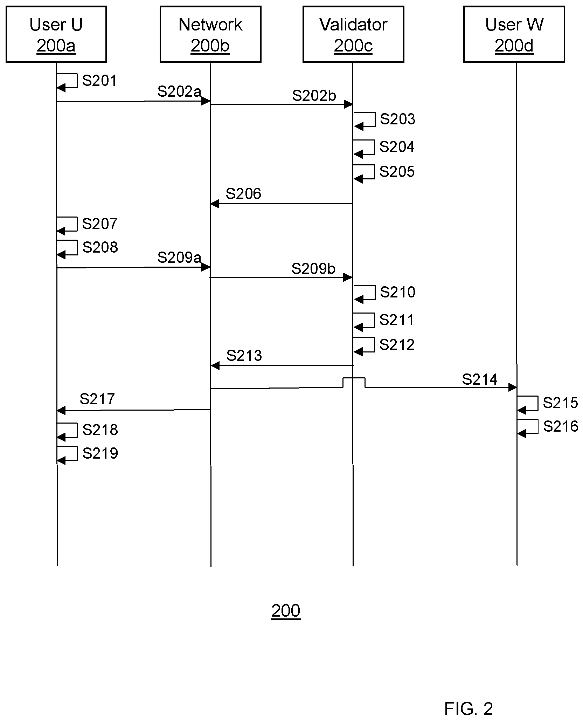

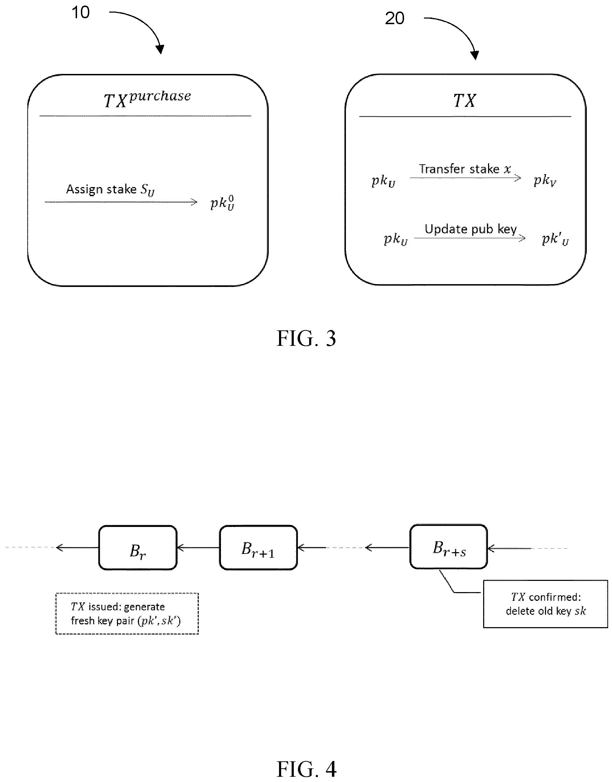

A first preferred embodiment will be explained further with reference to FIGS. 2-4. FIG. 2 illustrates a signal diagram showing a method according to the first preferred embodiment. FIG. 3 illustrates an initial (purchase) transaction and a payment transaction. FIG. 4 illustrates the key-update and key-deletion mechanism for blockchain.

The first preferred embodiment of the present invention includes a novel mechanism to update the account keys of blockchain users. A feature behind this method is to let users regularly delete old keys so that corruption of a user's account cannot be exploited to issue transactions in the past, as these transactions would have to be signed with old keys. The key-update mechanism only affects the format of transactions and does not imply any modification to the mining protocol for validators.

As described in technical detail below, the first preferred embodiment includes: (1) employing a key-evolving mechanism to limit the effect of key exposure in the context of posterior-corruption of users; and (2) leveraging the public-ledger functionality of the blockchain to make the key-update mechanism more efficient than traditional key-evolving cryptographic techniques.

Referring to FIG. 2, the first preferred embodiment of the present invention can include the following operations as represented in the signal diagram 200. The signal diagram 200, illustrates several components of a blockchain system (which may be implemented like blockchain system 100), including a user *U* 200a, the blockchain network 200b, a validator 200c, and another user *W* 200d. A person of ordinary skill in the art, however, would recognize that the mechanism described herein can be applied to a blockchain system with additional components (e.g., many more nodes, including a plurality of validators and users).

Upon joining the blockchain network 200b, the user *U* 200a generates an initial signing key-pair ( $pk_U^0$ , $sk_U^0$ ) (S201).

The user *U* 200a may optionally purchase a given amount of stake $S_U$, otherwise their stake is set to $S_U = 0$. In an embodiment, the stake may be purchased as digital currency in exchange for other currency (e.g., fiat currency).

To purchase stake, the user *U* 200a issues a *purchase-stake* transaction TX$^{purchase}$. For example, the user *U* 200a can broadcast the *purchase-stake* transaction TX$^{purchase}$ to the blockchain network 200b (S202a). FIG. 3 illustrates an example of a *purchase-stake* transaction TX$^{purchase}$ 10.

After the user *U* 200a broadcasts the *purchase-stake* transaction TX$^{purchase}$ to the blockchain network 200b, at least one validator 200c will receive the *purchase-stake* transaction TX$^{purchase}$ (S202b).

The validator 200c then confirms the *purchase-stake* transaction TX$^{purchase}$ (S203). Once confirmed, the validator 200c will create a new block that includes the *purchase-stake* transaction TX$^{purchase}$ (S204). The validator 200c will then add the new block to the blockchain (S205), and broadcast the updated blockchain to the blockchain network 200b (S206).

Because the *purchase-stake* transaction TX$^{purchase}$ is confirmed and included in a block of the blockchain, the other blockchain nodes are effectively informed that a new user with account public-key $pk_U^0$ and initial stake $S_U$ joined the blockchain network 200b.

Whenever the user U 200a wishes to transfer a given amount of stake $s \le S_U$, where $S_U$ is the current account balance of *U,* to some other user account *V, U* issues a corresponding transaction *TX* that, beyond respecting the transaction format of the underlying digital currency, shall indicate public key $pk_U$ as the *source* account, $pk_V$ as the *destination* account, and *x* as the amount of stake to be transferred. User *U* 200a also encapsulates into *TX* a second type of information, namely an updated account public-key.

Referring back to FIG. 2, to transfer a portion of its stake to the user *V*, the user *U* 200a first generates a fresh signing key pair ( $pk_U'$ , $sk_U'$ ) (S207). Then, to declare $pk_U'$ as the new account public key, the user *U* 200a generates a transaction *TX,* which indicates its entire stake $S_U$ as the overall input stake, *x* as the amount of stake to be transferred to public key $pk_V$ (of the user *V*), and $S_U$ - *x* as the amount of stake to be addressed to the user *U's* fresh public key $pk'_U$ (S208). FIG. 3 illustrates an example transaction *TX* 20.

The user *U* 200a then broadcasts the resulting transaction *TX* to the blockchain network 200b (S209a).

At least one validator 200c can then receive the broadcast transaction *TX* (S209b). The validator 200c will then confirm the transaction *TX* (S210), generate a new block including the transaction *TX* (S211), add the new block to the blockchain (S212), and then broadcast the updated blockchain to the blockchain network (S213).

Subsequently, the transaction *TX* can be confirmed by another user *W* 200d. The user W 200d will receive the blockchain (S214), and then the user *W* 200d can confirm the transaction *TX* by checking to see if it appears in one of the blocks of the blockchain and is "sufficiently deep" in the blockchain (S215). If the transaction *TX* is confirmed, the user *W* 200d registers $pk'_U$ as the current public key of user *U* 200a (S216).

The issuer user U200a can also confirm the transaction *TX*. Here, the user *U* 200a will receive the blockchain (S217) and confirm the transaction *TX* (S218). After the transaction *TX* is confirmed by the issuer user *U* 200a, the user *U* 200a will delete its outdated secret key $sk_U$ and use $(pk'_U, sk'_U)$ as its current key pair (S219).

Transactions are confirmed (or validated) against the (current) public key $pk_{issuer}$ of the issuer as well as their amount of stake held by them, according to the validation predicate specified by the digital currency. Transactions may be confirmed in this manner by a validator or a user. Furthermore, a validated transaction may also be confirmed that it is finalized or settled by determining whether the transaction is part of a block that is sufficiently deep.

The key-evolving mechanism of the present embodiment is based on forward-secure cryptography, which in-turn, is based on frequent key updates coupled with secure deletion of old keys. Forward-secure cryptography specifically aims at limiting the effect of key exposure, namely it guarantees that data protected in the past remains secure. FIG. 4 illustrates a key-update and key-deletion mechanism. FIG. 4 depicts a scenario where a user issues a transaction and generates a new pair of keys (pk', sk') for his updated account. The transaction is included in block Br, and confirmed in block Br+s, and user X deletes his old key pair (pk, sk) at block Br+s. Upon corrupting the user, adversaries can no longer transfer the user's stake prior to round Br.

A blockchain user (e.g., via a device-such as computer device-used by a user of the blockchain network) can implement the first preferred embodiment. For example, the blockchain user my perform initialization and key update operations, such as described above, to prevent long-range attacks based on posterior corruption of users.

A second preferred embodiment includes a novel mining procedure for PoS blockchain protocols. The second preferred embodiment uses the concept of stake and introduces an abstraction of a PoS protocol in which the stake is decoupled into two resources: (1) one resource used exclusively for transferring value (stake as "digital currency"); and (2) the other resource used exclusively for generating blocks (stake as "mining resource"). The mining stake is assigned to each validator upon joining the mining protocol and cannot be transferred to other validators. In this way, an adversary cannot take advantage from corrupting validators owning majority of mining stake in the past, as the mining stake would have to be moved to the adversary's validator account, which is disallowed by the protocol.

For the description of the second preferred embodiment, it is assumed that a PoS scenario exists where any user who wishes to become a validator is be equipped with a TEE device and remote-attests it prior to registering it to the blockchain network as a new mining device. Also, a new node should be registered as a user in order to become a validator. Hence, as detailed below, it is assumed that a user *U* owns a stake $S_U$ at the moment of registering their TEE device for mining.

A blockchain node may implement a method according to the second preferred embodiment (e.g., via a blockchain node's device-such as a computer device-configured to execute the method) to prevent posterior-corruption long-range attacks in a proof of stake blockchain protocol. Here, the blockchain node may perform one or more of the following operations: (1) initialization and registration of the TEE device; (2) block generation; and (3) blockchain validation.

In the initialization and registration of the TEE device operation, the blockchain node: (1) generates a signing key pair within the trusted enclave application of the TEE device; and (2) remotely-attests the trusted application and issues a registration transaction to distribute the attestation certificate (this transaction specifies the amount of mining stake purchased by the validator). Once the registration transaction is confirmed, the TEE device can be used for mining.

In the block generation operation, the blockchain node: (1) generates the eligibility proof within the trusted application; (2) if eligible to generate a block for the considered round, prepares the block header and requests the corresponding block signature from the trusted application; and (3) broadcasts the signed block to the blockchain network.

In the block validation operation, the blockchain node, upon receiving an alternative chain, verifies the consistency of the latest block's timestamp against the local time. If the verification succeeds, the blockchain node validates the block of the blockchain according to its verification procedure.

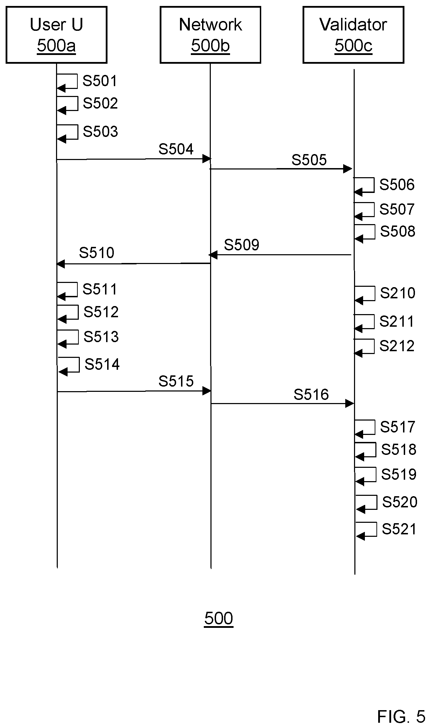

An implementation of the method according to the second preferred embodiment is explained in detail below with reference to FIG. 5, which is a signal diagram 500 for a blockchain network.

As shown in FIG. 5, a user U 500a executes an initialization and registration procedure to register its TEE device to become a blockchain validator. Here, the user U 500a generates a signing key pair with the trusted enclave application of its TEE device (S501), and remotely-attests the trusted enclave application (S502).

The user U 500a then generates a *registration* transaction $TX^{reg}$ (S503). The generated *registration* transaction $TX^{reg}$ includes the public key $pk_U$ of the user U 500a, the public key $pk_U^T$ associated with the TEE signing key, and the mining stake $MS_U$, $0 \leq MS_U \leq \min\{S_U, MS_{max}\}$, to be allocated to the user U 500a's mining device. Here, $MS_{max}$ is a protocol-specific threshold determining the maximum amount of mining stake that can be awarded to validators. The mining stake is effectively purchased in exchange of digital currency, hence it cannot exceed the balance of user U 500a.

The user U 500a can then register the TEE by issuing broadcasting the *registration* transaction $TX^{reg}$ to the blockchain network 500b (S504). However, the user U 500a does not become a recognized as a validator in the blockchain network 500b until the *registration* transaction $TX^{reg}$ is confirmed. According to an embodiment, the *registration* transaction $TX^{reg}$ is confirmed if it appears in a "sufficiently deep" block of the blockchain. A "sufficiently deep" block is one that is followed by N many blocks, where N is a parameter of the underlying PoS protocol.

Thus, to get the *registration* transaction $TX^{reg}$ on the blockchain-and to get it sufficiently deep in the blockchain-a current validator 500c will need to receive the *registration* transaction $TX^{reg}$ (S505), confirm the *registration* transaction $TX^{reg}$ (S506), generate a block that incorporates the *registration* transaction $TX^{reg}$ (S507), add the block to the blockchain (S508), and broadcast the new blockchain to the blockchain network 500b (S509). Depending on how the blockchain protocol defines the parameter for when a block is "sufficiently deep", other blocks may need to be generated by a current validator (such has validator 500c or another validator) before the user U 200a can be recognized as a validator.

Once the user U 200a is recognized as validator, it can start mining blocks of the blockchain (i.e., it will be eligible to execute the block generation operation). As part of the block generation operation, the user U 200a may itself first determine whether it is eligible to mine blocks (S511). The user U 200a may initiate such self-determination after receiving a new transaction from the blockchain network 200b (S510).

To determine its eligibility, the user U 200a may generate the eligibility proof within the trusted enclave application. The eligibility proof may include checking to see if its *registration* transaction $TX^{reg}$ is included in the blockchain, that its *registration* transaction $TX^{reg}$ is valid (e.g., by checking the signature against its keys), and checking to see that the *registration* transaction $TX^{reg}$ is included in a block of the blockchain that is sufficiently deep. The user U 200a may check its eligibility before each attempt to generate a new block, or may check its eligibility only up to the time it first confirms that it is eligible to act on the blockchain network as a validator.

If the user U 200a is eligible to operate as validator in a given round r, it will generate a block $B_r$ following the procedure indicated by the underlying PoS protocol. The validator will receive a reward for contributing the mining process: part of it in digital currency (e.g., the overall amount of fees for the transactions included in the block), and part of it in mining stake (e.g., an amount corresponding to the block reward). To this end, the user U 200a can execute the underlying PoS mining protocol, such that the validators are weighed depending on their mining stake $MS_U$ rather than their currency stake $S_U$.

Referring back to FIG. 5 in the block generation operation, after determining its eligibility, the user U 200a prepares the block header and requests the corresponding block signature from the trusted application (S512).

The user U200a can then generate the block (S513), add the signed block to the blockchain (S514), and broadcast blockchain to the blockchain network 500b (S515).

According to a method implementing the second preferred embodiment, a blockchain validator may execute a block validation operation. The block validation operation closely follows the underlying PoS protocol, and includes checking the eligibility of an alleged block leader U against their mining stake $MS_U$ (rather than their currency stake $S_U$).

For example, referring back to FIG. 5, the validator 500c receives a new blockchain (S516), and verifies the consistency of the latest block's timestamp against the local time (S517). If the verification fails it rejects the chain. Otherwise, for all blocks-and starting from the latest block-the validator 500c verifies that: (1) the block signature is valid with respect to the public key of the TEE device associated to the alleged block leader (S518); (2) the alleged block leader was eligible for the corresponding round with respect to their mining stake (S519); the header is well-formed and points to the previous block (S520); and (4) the transactions included in the block are valid (S521).

As described in technical detail above, a method according to the second preferred embodiment includes: (1) Identifying a PoS abstraction that reflects the dual nature of stake as currency and as mining resource; (2) Binding mining resources to their owners for limiting the effect of posterior corruption of validators; and (3) Enforcing a single enclave per TEE platform to weaken the voting power of compromised TEE devices.

In the context of the envisioned PoS scenario, the protocol of embodiments of the present invention offers security in the presence of compromised TEE devices as long as each device can support at most one enclave at a time. Embodiments guarantee this through the remote-attestation procedure. More concretely, if the TEE is instantiated with Intel SGX or with TMP, the attestation quote includes an EPID or a DAA pseudo-name, respectively, which can be configured as linkable or unlinkable depending of the choice of the base-name. Using the linkable mode, all quotes produced by the same platform must use the same base-name, hence multiple enclaves running on the same platform result in the same EPID/DAA signature authenticating the quotes. The protocol of embodiments of the present invention enforces the linkable mode, and thus guarantees that an adversary launching different enclaves on the same TEE platform will be detected. Put differently, the only way for an adversary to obtain considerable voting power is to compromise several TEE devices (corresponding to majority of mining stake), which is essentially unfeasible.

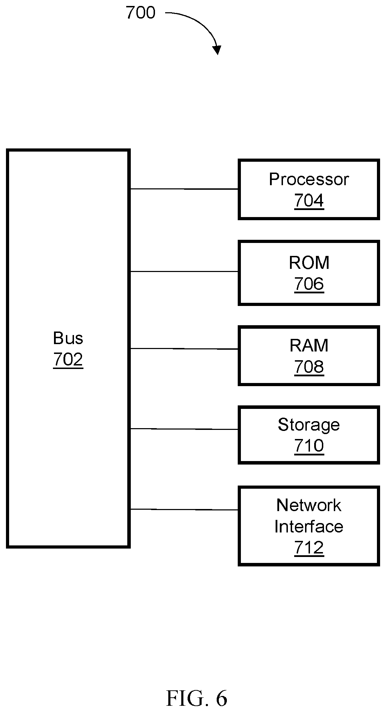

FIG. 6 is a block diagram of a processing system according to an embodiment. The processing system 700 can be used to implement the protocols, devices, mechanism, systems and methods described above. The processing system 700 includes a processor 704, such as a central processing unit (CPU) of a computing device or a distributed processor system. The processor 704 executes processor executable instructions (including scripts) comprising embodiments of the system for performing the functions and methods described above. In embodiments, the processor executable instructions are locally stored or remotely stored and accessed from a non-transitory computer readable medium, such as storage 710, which may be a hard drive, cloud storage, flash drive, etc.. Read Only Memory (ROM) 706 includes processor executable instructions for initializing the processor 704, while the random-access memory (RAM) 708 is the main memory for loading and processing instructions executed by the processor 704. The network interface 712 may connect to a wired network or cellular network and to a local area network or wide area network, such as the Internet.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for preventing posterior-corruption long-range attacks in a proof of stake blockchain protocol on a blockchain network, the method comprising:

   generating, by a blockchain node, a fresh key pair, having a fresh public key to be included into a transaction and a fresh private key to be used for signing a next transaction;
   generating, by the blockchain node, the transaction having as an input an overall stake associated to an account of the blockchain node, and as an output a transfer stake to be transferred to a second node's public key, and a remaining account stake to be transferred to the fresh public key;
   signing, by the blockchain node, the transaction with a previous private key; and
   broadcasting, by the blockchain node, the generated transaction to the blockchain network.

2. The method according to claim 1, the method further comprising:

   receiving, by the blockchain node, an indication that the broadcasted transaction is confirmed; and
   deleting, by the blockchain node, the private key associated with the broadcasted transaction based upon receiving the indication that the broadcasted transaction is confirmed.

3. The method according to claim 1 or 2, wherein the transaction is signed with a most recent non-fresh private key.

4. The method according to any of claims 1 to 3, wherein the blockchain node generates a new fresh key pair for every transaction the blockchain node issues and deletes a previous fresh key pair when a previously broadcasted transaction is confirmed.

5. A blockchain node comprising a processor and a memory, the memory comprising processor executable instructions that, when executed by the processor, cause the processor to perform the following operations for preventing posterior-corruption long-range attacks in a proof of stake blockchain protocol in a blockchain network:

generate a fresh key pair, having a fresh public key to be included into a transaction and a fresh private key to be used for signing a next transaction;

generate a transaction having as an input an overall stake associated to an account of the blockchain node, and as output a transfer stake to be transferred to a second node's public key, and a remaining account stake to be transferred to the fresh public key;

sign the transaction with a previous private key; and

broadcast the generated transaction to the blockchain network.

6. The blockchain node according to claim 5, the instructions being configured to further cause the processor to perform the following operations:

receive an indication that the broadcasted transaction is confirmed; and

delete the private key associated with the broadcasted transaction based upon receiving the indication that the broadcasted transaction is confirmed.

7. The blockchain node according to claim 5 or 6, wherein the transaction is signed with a most recent non-fresh private key.

8. The blockchain node according to any of claims 5 to 7, wherein the blockchain node generates a new fresh key pair for every transaction the blockchain node issues and deletes a previous fresh key pair when a previously broadcasted transaction is confirmed.

9. The blockchain node according to any of claims 5 to 8, the instructions being configured to further cause the processor to perform the following operations: generating an initial key pair; purchasing digital currency and issuing a corresponding transaction on the blockchain network indicating that the blockchain node with the initial public key has an initial stake corresponding to the purchased digital currency.

10. A method for preventing posterior-corruption long-range attacks in a proof of stake blockchain protocol in a blockchain network, the method comprising:

generating, by a blockchain node associated with a TEE device, a signing key pair, including a public key and a private key;

remotely-attesting, by the blockchain node, a trusted enclave application, including generating an attestation certificate; and

issuing, by the blockchain node, a registration transaction to distribute the attestation certificate; the registration transaction specifying an amount of mining stake purchased by the blockchain validator,

wherein once the registration transaction is confirmed, the TEE device becomes enabled for mining blocks in the blockchain network.

11. The method according to claim 10, wherein the registration transaction is confirmed based on the registration transaction appearing in a block of the blockchain that is followed by a predetermined number of blocks.

12. The method according to claim 11, wherein the registration transaction is confirmed further based on the blockchain node generating an eligibility proof within the trusted enclave application.

13. The method according to any of claims 10 to 12, wherein the method further comprises:

determining, by the blockchain node, that the blockchain node is eligible to generate the block for a considered round,

preparing, by the blockchain node based on determining the blockchain node is eligible to generate the block, a block header and receiving a corresponding block signature from the trusted application enclave;

signing, by the blockchain node, the block with the corresponding block signature; and

broadcasting, by the blockchain node, the signed block to the blockchain network.

14. The method according to any of claims 10 to 13, further comprising a method of an offline node that connects to the blockchain network to confirm a version of the blockchain comprises:

receiving, by the blockchain node, a blockchain,

verifying, by the blockchain node, a consistency of a latest block's timestamp of the blockchain against a local time; and

if the verifying fails, rejecting by the blockchain node, the blockchain, otherwise the blockchain node performs a verification operation for all blocks of the blockchain.

15. The method according to claim 14, wherein the verification operation comprises, for each of the blocks and starting with a latest block of the blocks:

verifying that a block signature is valid with respect to the public key of the TEE device associated with a corresponding block leader;
verifying that the corresponding block leader was eligible for a corresponding round with respect to the corresponding block leader's mining stake;
verifying that a corresponding header is well-formed and points to a previous block of the blocks; and
verifying that transactions included are valid.

FIG. 1

FIG. 2

10

20

$$TX^{purchase}$$

$$TX$$

Assign stake $S_U$ ────────────▶ $pk_U^0$

$pk_U$ ──Transfer stake $x$──▶ $pk_V$

$pk_U$ ──Update pub key──▶ $pk'_U$

FIG. 3

◀─ ─ ─ ◀ $B_r$ ◀──── $B_{r+1}$ ◀─ ─ ◀─ ─ $B_{r+s}$ ◀─ ─ ─

$TX$ issued: generate
fresh key pair $(pk', sk')$

$TX$ confirmed:
delete old key $sk$

FIG. 4

FIG. 5

700

| Processor 704 |

| ROM 706 |

| Bus 702 | | RAM 708 |

| Storage 710 |

| Network Interface 712 |

FIG. 6

Europäisches
Patentamt

European
Patent Office

Office européen
des brevets

# EUROPEAN SEARCH REPORT

Application Number

EP 21 19 1530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERNARDO DAVID ET AL: "Ouroboros Praos: An adaptively-secure, semi-synchronous proof-of-stake protocol", IACR, INTERNATIONAL ASSOCIATION FOR CRYPTOLOGIC RESEARCH , vol. 20171115:001835 13 June 2017 (2017-06-13), pages 1-39, XP061023643, Retrieved from the Internet: URL:http://eprint.iacr.org/2017/573.pdf [retrieved on 2017-06-13] * Section 2.4 and appendix B.2 * ----- | 1-9 | INV. H04L9/08 H04L9/32 |
| X | YOSSI GILAD ET AL: "Algorand: Scaling Byzantine Agreements for Cryptocurrencies", IACR, INTERNATIONAL ASSOCIATION FOR CRYPTOLOGIC RESEARCH , vol. 20170924:210956 6 June 2017 (2017-06-06), pages 1-15, XP061023568, Retrieved from the Internet: URL:http://eprint.iacr.org/2017/454.pdf [retrieved on 2017-06-06] * Page 10, left-hand column, section "Forward Security" * ----- | 1-9 | |
| A | SHEHAR BANO ET AL: "Consensus in the Age of Blockchains", ARXIV.ORG, CORNELL UNIVERSITY LIBRARY, 201 OLIN LIBRARY CORNELL UNIVERSITY ITHACA, NY 14853, 10 November 2017 (2017-11-10), XP081287267, * Page 7, right-hand column, last 13 lines * ----- | 1-9 | |

TECHNICAL FIELDS
SEARCHED (IPC)

H04L

-/--

The present search report has been drawn up for all claims

| Place of search | Date of completion of the search | Examiner |
|---|---|---|
| Munich | 27 October 2021 | Wolters, Robert |

EPO FORM 1503 03.82 (P04C01)

page 1 of 2

Europäisches
Patentamt

European
Patent Office

Office européen
des brevets

## EUROPEAN SEARCH REPORT

Application Number

EP 21 19 1530

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANSOOR AHMED ET AL: "Don't Mine, Wait in Line: Fair and Efficient Blockchain Consensus with Robust Round Robin", ARXIV.ORG, CORNELL UNIVERSITY LIBRARY, 201 OLIN LIBRARY CORNELL UNIVERSITY ITHACA, NY 14853, 20 April 2018 (2018-04-20), XP081014879, * Section 4.1 * | 10-15 | |

TECHNICAL FIELDS
SEARCHED (IPC)

The present search report has been drawn up for all claims

| Place of search | Date of completion of the search | Examiner |
|---|---|---|
| Munich | 27 October 2021 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62737987

- US 55626719